Europäisches Patentamt

European Patent Office

Office européen des brevets

(11) Veröffentlichungsnummer: **0 464 437 A1**

## (12) EUROPÄISCHE PATENTANMELDUNG

(21) Anmeldenummer: **91109851.5**

(51) Int. Cl.5: **A01G 9/02**, A47B 47/04

(22) Anmeldetag: **15.06.91**

(30) Priorität: **22.06.90 DE 9006971 U**

(43) Veröffentlichungstag der Anmeldung:
**08.01.92 Patentblatt 92/02**

(84) Benannte Vertragsstaaten:
**AT BE CH DE DK FR IT LI LU NL SE**

(71) Anmelder: **Popitz, Jürgen Albert**
**Blumenstrasse 9**
**W-8301 Weihmichl(DE)**

(72) Erfinder: **Popitz, Jürgen Albert**
**Blumenstrasse 9**
**W-8301 Weihmichl(DE)**

(74) Vertreter: **Gustorf, Gerhard, Dipl.-Ing.**
**Patentanwalt Dipl.-Ing. Gerhard Gustorf**
**Bachstrasse 6 A**
**W-8300 Landshut(DE)**

(54) **Behälter für Pflanzen.**

(57) Der Behälter dient zur Aufnahme von Pflanzen. Seine Seitenwände (10) bilden im Grundriß ein Polygon und bestehen aus wenigstens einem Ring (12), der aus Leisten (16) zusammengesetzt ist, deren Zahl der Zahl der das Polygon bildenden Seitenwände (10) entspricht und die an ihren beiden Endbereichen über schräg verlaufende, bis zur halben Leistenhöhe reichende Einschnitte (18) ineinandergesteckt sind.

Fig. 4

EP 0 464 437 A1

Die Erfindung betrifft einen Behälter zur Aufnahme von Pflanzen, dessen Seitenwände im Grundriß ein Polygon bilden.

Bekannte Pflanzkübel dieser Bauart bestehen entweder aus Kunststoff, wobei die Seitenwände einstückig durch Spritzguß o. dgl. hergestellt und fest miteinander verbunden sind, oder aus Holzwänden, die im Grundriß ein Rechteck bilden und miteinander verleimt sind.

Der Erfindung liegt die Aufgabe zugrunde, einen Behälter zur Aufnahme von Pflanzen zur Verfügung zu stellen, dessen Seitenwände so ausgebildet sind, daß sie vom Benutzer ohne Zuhilfenahme von Werkzeug einfach und rasch zusammengebaut werden können.

Gemäß der Erfindung wird diese Aufgabe bei einem Behälter der eingangs umrissenen Gattung dadurch gelöst, daß die Seitenwände aus wenigstens einem Ring bestehen, der aus Leisten zusammengesetzt sind, deren Zahl der Zahl der das Polygon bildenden Seitenwände entspricht und die an ihren beiden Endbereichen über schräg verlaufende, bis zur halben Leistenhöhe reichende Einschnitte ineinandergesteckt sind.

Mit dieser Lösung wird der Vorteil erzielt, daß der Hersteller den Behälter im unmontierten Zustand bei kleinstem Raumbedarf versenden kann, während der Anwender mit wenigen Handgriffen die Montage vornimmt. Da die Leisten im zusammengesteckten Zustand einen stabilen Ring bilden, kann auf den Einsatz von Leim oder Klebstoff verzichtet werden. Ein weiterer Vorteil ist darin zu sehen, daß auch der Anwender im Bedarfsfall den Behälter rasch zerlegen kann, beispielsweise bei einem Ortswechsel.

Die die Seitenwände bildenden Leisten bestehen vorzugsweise aus Holz, wobei jedoch auch andere Werkstoffe möglich sind, beispielsweise Kunststoff oder Leichtmetall.

Wenn der Behälter aus mehreren Ringen zusammengesetzt ist, die übereinander angeordnet sind, können diese über im wesentlichen vertikale Zapfen miteinander verbunden werden. Die Zapfen können dabei die Ringe auf Abstand voneinander halten.

Der Behälter kann als Pflanzring ohne Boden verwendet werden. Es besteht jedoch auch die Möglichkeit, im untersten Ring einen Boden anzubringen, so daß der Behälter nach unten abgeschlossen ist. Dabei empfiehlt es sich, den Boden aus Nut- und Feder-Brettern zusammenzusetzen. Wenn die Seitenwände und ggf. auch der Boden aus Holz bestehen, ist es zweckmäßig, die Innenwände mit einer Folie auszukleiden, um eine unmittelbare Berührung des Holzes mit der feuchten Erde zu vermeiden.

Wenn an der Unterseite des untersten Ringes selbstlenkende Rollen abnehmbar angebracht sind, läßt sich der Behälter auch dann leicht verschieben, wenn er verhältnismäßig groß und schwer ist.

Es ist vorteilhaft, wenn in den Boden wenigstens ein Tropfloch eingearbeitet ist, unter dem eine flache Tropfwanne angeordnet ist, die in zwei parallele Führungsschienen eingeschoben ist.

Die Erfindung ist nachstehend an Ausführungsbeispielen erläutert, die in der Zeichnung dargestellt sind.

Es zeigen:

Figur 1     die Draufsicht eines Behälters gemäß der Erfindung, wobei die Seitenwände ein Achteck bilden,

Figur 2     eine Seitenansicht des Behälters in Richtung der Pfeile II - II der Figur 1,

Figur 3     eine der Figur 2 entsprechende Seitenansicht eines Behälters mit Tropfwanne,

Figur 4     die perspektivische Ansicht eines als Pflanzring ausgebildeten Behälters mit sechseckigem Grundriß und

Figur 5     die vergrößerte Darstellung von zwei Leisten beim Zusammenbau.

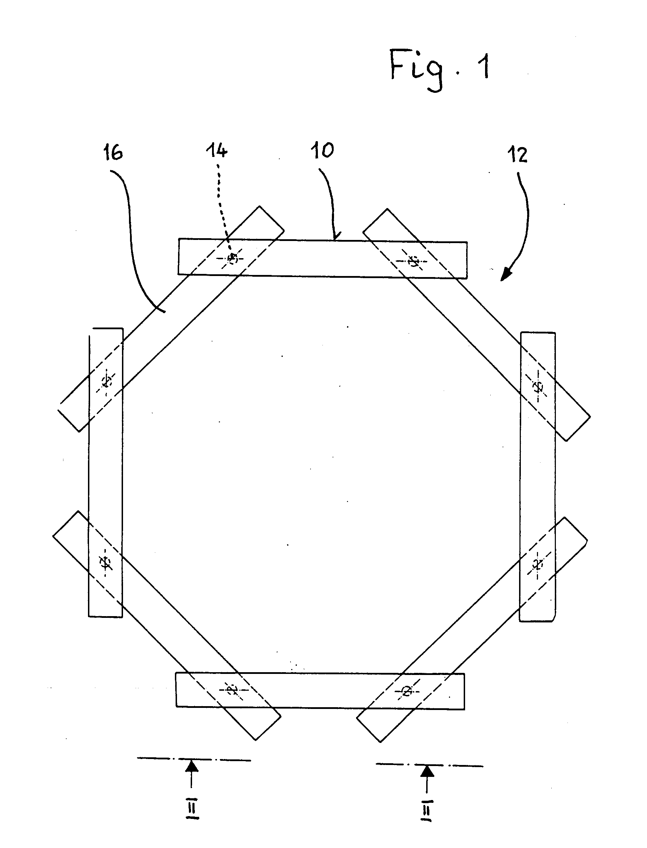

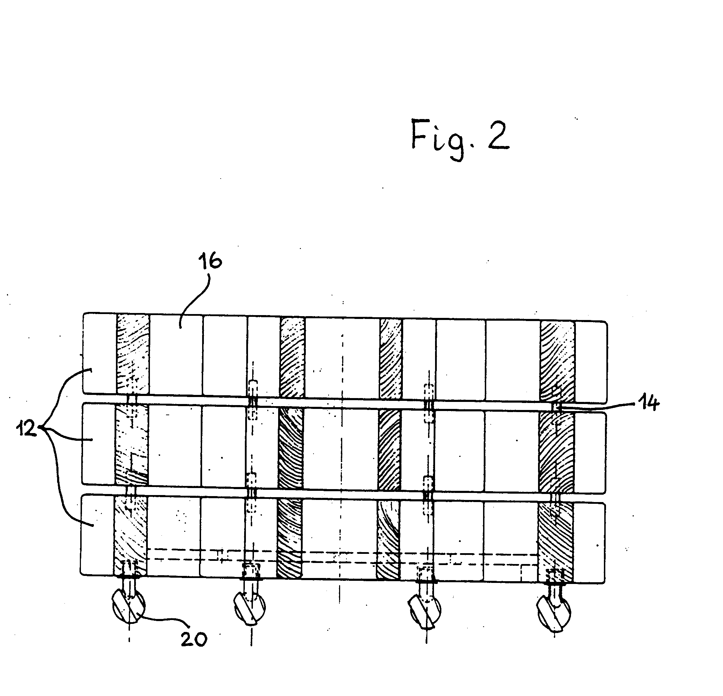

Die Figuren 1 und 2 zeigen einen Behälter, dessen Seitenwände 10 im Grundriß ein Achteck bilden und aus drei Ringen 12 bestehen, die übereinander angeordnet sind. Die Ringe sind über vertikale Zapfen 14 miteinander verbunden und auf Abstand gehalten.

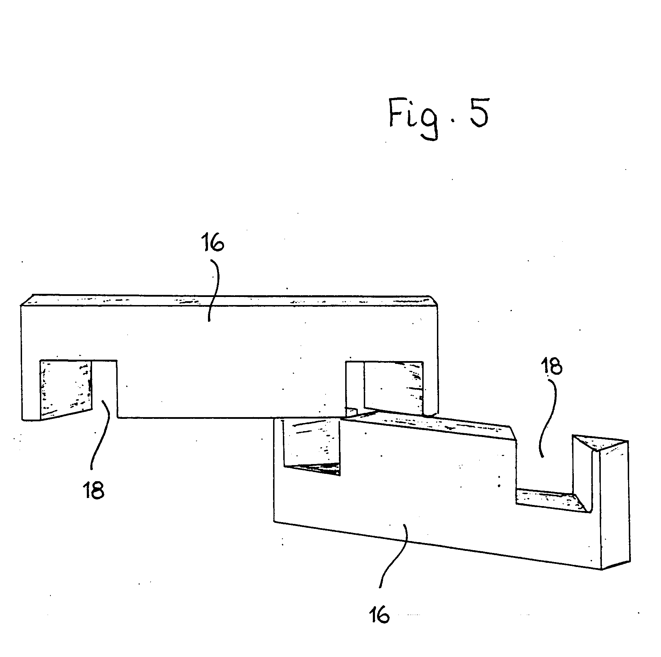

Jeder Ring 12 ist aus acht Leisten 16 zusammengesetzt. Wie Figur 5 zeigt, hat jede Leiste 16 an ihren beiden Endbereichen je einen schräg verlaufenden Einschnitt 18, der von einer Längsseite ausgeht und bis zur halben Leistenhöhe reicht. Über diese Einschnitte 18 können die Leisten 16 ineinandergesteckt werden, so daß der fertige Ring 12 einen festen Verbund darstellt. Selbstverständlich ist es möglich, die Steckverbindungen im Bereich der Einschnitte 18 durch Leim zu sichern.

Figur 2 zeigt, daß an der Unterseite des untersten Ringes 12 selbstlenkende Rollen 20 abnehmbar angebracht sind.

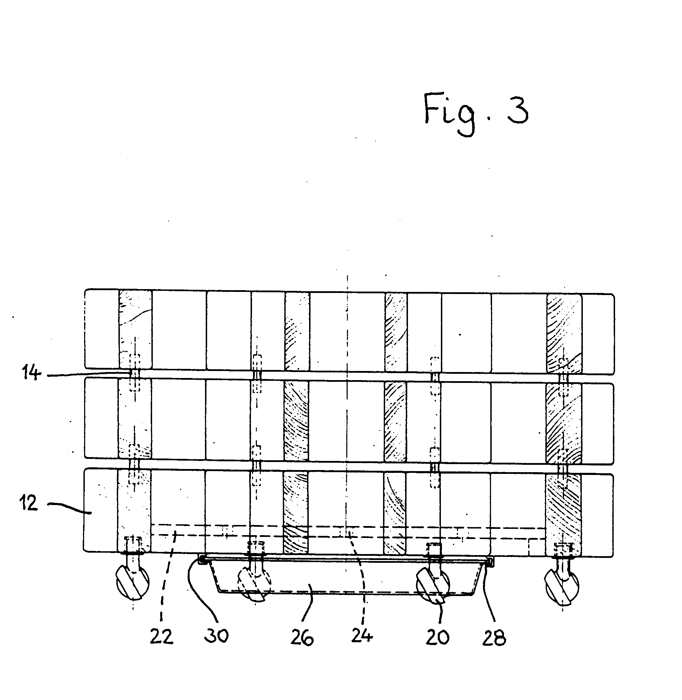

Beim Ausführungsbeispiel der Figur 3 ist zu erkennen, daß im untersten Ring 12 ein Boden 22 angebracht ist, in welchen Tropflöcher 24 eingearbeitet sind. Unter den Tropflöchern 24 befindet sich eine flache, runde Tropfwanne 26, deren Seitenrand 28 in zwei parallele Führungsschienen 30 eingeschoben ist. Die Führungsschienen 30 sind C-förmig ausgebildet und am Boden 22 oder am untersten Ring 12 befestigt. Die Tropfwanne 26, für die ein handelsüblicher Untersetzer aus Kunststoff verwendet werden kann, läßt sich leicht herausnehmen und entleeren.

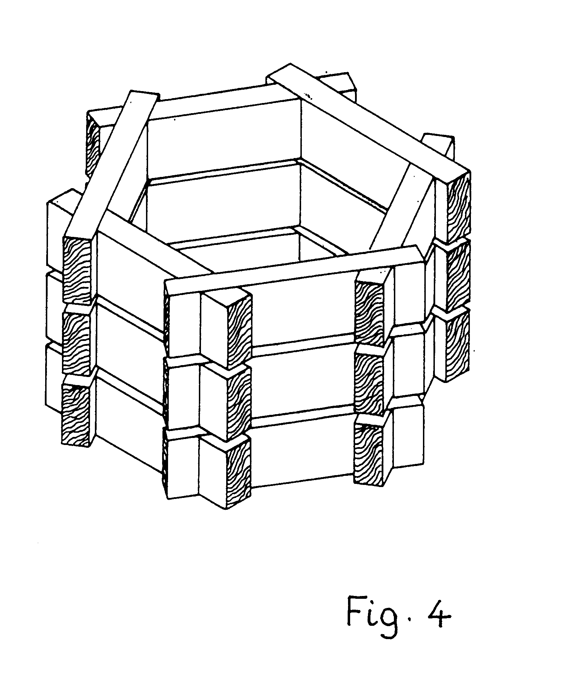

Figur 4 zeigt schließlich ein Ausführungsbeispiel, bei dem der Behälter als im Grundriß sechseckiger Pflanzring ausgebildet ist.

Selbstverständlich besteht über die dargestellten Ausführungsbeispiele hinaus auch die Möglichkeit, die Ringe 12 nicht mit Abstand übereinander anzubringen, sondern ohne Zwischenräume miteinander zu verbinden. Bei einer weiteren Variante sind die Leisten 16 so geformt, daß die Seitenwände 10 des Behälters nach oben hin divergieren.

Die Leisten 16, deren Kanten und Ecken vorzugsweise abgerundet sind, können aus Holz hergestellt werden, das nach dem Bearbeiten mit einer Lackierung auf Wasserlösungsbasis (sog. Hydrolack) versehen wird. Es ergibt sich damit ein umweltfreundlicher Behälter, der sowohl innen als auch außen verwendet werden kann.

**Patentansprüche**

1.  Behälter zur Aufnahme von Pflanzen, dessen Seitenwände im Grundriß ein Polygon bilden, dadurch gekennzeichnet, daß die Seitenwände (10) aus wenigstens einem Ring (12) bestehen, der aus Leisten (16) zusammengesetzt ist, deren Zahl der Zahl der das Polygon bildenden Seitenwände (10) entspricht und die an ihren beiden Endbereichen über schräg verlaufende, bis zur halben Leistenhöhe reichende Einschnitte (18) ineinandergesteckt sind.

2.  Behälter nach Anspruch 1, dadurch gekennzeichnet, daß mehrere Ringe (12) über i.w. vertikale Zapfen (14) miteinander verbunden sind und auf Abstand gehalten sind.

3.  Behälter nach Anspruch 1 oder 2, dadurch gekennzeichnet, daß an der Unterseite des untersten Ringes (12) selbstlenkende Rollen (20) abnehmbar angebracht sind.

4.  Behälter nach einem der vorhergehenden Ansprüche, dadurch gekennzeichnet, daß im untersten Ring (12) ein Boden (22) angebracht ist.

5.  Behälter nach Anspruch 4, dadurch gekennzeichnet, daß in den Boden (22) wenigstens ein Tropfloch (24) eingearbeitet ist, unter dem eine flache Tropfwanne (26) angeordnet ist, die in zwei parallele Führungsschienen (30) eingeschoben ist.

# Fig. 1

Fig. 2

Fig. 3

Fig. 4

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-2 215 310   (NELSON)<br>* Seite 1, Zeilen 2-15; Seite 5, Zeile 25 - Seite 6, Zeile 26; Abbildungen 3,4 * | 1 | A 01 G 9/02<br>A 47 B 47/04 |
| Y | | 3-5 | |
| | — — — | | |
| Y | GB-A-2 116 814   (EVANS)<br>* das ganze Dokument * | 1 | |
| | — — — | | |
| Y | BE-A-561 276   (NAAMLOZE VENNOOTSCHAP PHILIP'S GLOEILAMPENFABRIEKEN)<br>* Seite 2, Absätze 2-5; Seite 6, Absatz 2; Abbildungen 1,2,6-9 * | 1 | |
| | — — — | | |
| Y | US-A-4 664 282   (CHAN et al.)<br>* Spalte 2, Zeilen 20-64; Abbildungen 1-4 * | 4 | |
| A | | 2 | |
| | — — — | | |
| Y | DE-A-3 204 487   (MERTENS & WERNER GMBH)<br>* Seite 12, Absatz 3 - Seite 13, Absatz 1; Abbildung 4 * | 3 | |
| | — — — | | |
| Y | FR-A-411 654   (STEINER et al.)<br>* Seite 1, Zeilen 41-58; Abbildungen 1-3 *<br>— — — — — | 5 | **RECHERCHIERTE SACHGEBIETE (Int. Cl.5)**<br><br>A 01 G<br>A 47 B<br>B 65 D |

Der vorliegende Recherchenbericht wurde für alle Patentansprüche erstellt

| Recherchenort | Abschlußdatum der Recherche | Prüfer |
|---|---|---|
| Den Haag | 27 September 91 | FONTS CAVESTANY A. |